# EUROPÄISCHE PATENTSCHRIFT

(11) **EP 0 384 005 B1**
(45) Veröffentlichungstag und Bekanntmachung des Hinweises auf die Patenterteilung: **02.03.1994**
(21) Anmeldenummer: 89119363.3
(22) Anmeldetag: 18.10.1989
(51) Int. Cl.: B62D 33/07

(54) **Vorrichtung zum Kippen von Fahrerhäusern von Lastkraftwagen**
Tilting device for lorry driver's cabs
Dispositif de basculement de cabines de conducteurs de camions

(30) Priorität: 24.02.1989 DE 3905801
(43) Veröffentlichungstag der Anmeldung: 29.08.1990
(73) Patentinhaber: WEBER-HYDRAULIK GmbH, D-74361 Güglingen (DE)
(72) Erfinder: Obermeyer, Günter, D-7129 Güglingen (DE)
(74) Vertreter: Säger, Manfred, Dipl.-Ing.

(56) Entgegenhaltungen:
- DE-A- 2 203 452
- DE-A- 2 434 499
- PATENT ABSTRACTS OF JAPAN, Band 7, Nr. 203 (M-241)[1348], 8. September 1983;& JP-A-58 101 877 (HINO JIDOSHA KOGYO K.K.) 17-06-1983
- PATENT ABSTRACTS OF JAPAN, Band 9, Nr. 242 (M-417)[1965], 28. September 1985;& JP-A-60 94 876 (JIDOSHA KIKI K.K.) 28-05-1985

## Beschreibung

Die Erfindung betrifft eine gattungsgemäße Vorrichtung gemäß dem Oberbegriff des Hauptanspruches.

Kippvorrichtungen sind in einer Vielzahl von Ausführungsformen bekannt (DE-OS'en 22 03 452; 24 34 499; 33 14 404; DE-GM 84 01 438).

Alle diese bekannten Vorrichtung weisen den Nachteil auf, daß zumindest während des Kippens, zumeist wegen großer Reibradien auf die Kolbenstange des Kippzylinders große Kräfte wirken, welche diese auf Biegung beanspruchen, was nachteilig und infolgedessen unerwünscht ist.

Es ist eine gattungsgemäße Vorrichtung gemäß dem Oberbegriff bekannt (siehe JP-A-5810187), mittels der die Kippbewegung des Fahrerhauses in ihrer maximal gekippten Lage begrenzt werden soll. Hierzu weist das Langloch an seinem oberen Ende entgegen der Kipprichtung eine kulissenartig ausgebildete Kurve auf und sind am oberen Ende der Kolbenstange in deren Längserstreckung hintereinander zwei in dem Langloch laufende Rollen angeordnet, bei der die obere Rolle mit zunehmender Kippbewegung in die kulissenartige Kurve eingreift und bei Erreichen deren Endes eine weitere Kippbewegung des Fahrerhauses verhinderte.

Der Einsatz von Rollen ist jedoch aufwendig.

Der Erfindung liegt die Aufgabe zugrunde, eine gattungsgemäße Vorrichtung gemäß dem Oberbegriff des Hauptanspruches einfacher auszugestalten.

Diese Aufgabe wird bei einer gattungsgemäßen Vorrichtung gemäß dem Oberbegriff der Nebenansprüche erfindungsgemäß durch dessen kennzeichnende Merkmale gelöst.

So ist es prinzipiell möglich, den doppeltwirkenden Kippzylinder einmal so einzusetzen, daß er beim Kippen des Fahrerhauses aus der Fahrstellung in die gekippte Montagestellung ausgefahren wird (Anspruch 1), was die hauptsächliche Einbauweise sein dürfte, oder aber, daß er beim Kippen von der Fahrstellung in die Montagestellung eingezogen wird (Anspruch 2). Beiden Lösungen ist gemeinsam, daß der Anlenkbolzen mit geringem Spiel in dem Langloch geführt ist und beim Ausfahren bzw. Einfahren in den Bereich der Kurve in dem Langloch gelangt. Erreicht dann das Fahrerhaus die Kipptotpunktlage, in der dessen Schwerpunkt genau senkrecht über der ersten Drehachse angeordnet ist, so befindet sich der Anlenkbolzen im Bereich der Kurve, die dann so winklig angestellt ist, daß das nunmehr ziehend bzw. schiebend auf den Kippzylinder einwirkende Fahrerhaus nicht bewirken kann, daß der Anlenkbolzen aus dem Bereich der Kurve des Langlochs freikommt. Weil der Anlenkbolzen nur einen kleinen Durchmesser aufzuweisen braucht, sind die dadurch bewirkten Reibungskräfte und dadurch bewirkte Biegemomente auf den Kippzylinder gering.

In besonderer Ausgestaltung der Erfindung ist der Anlenkbolzen mit einem Wälz- oder Gleitlager zum Eingriff in das Langloch und die Kurve versehen und/oder selbst in einer Buchse oder einem Gelenklager gelagert, wodurch keine größeren Biegemomente auf dem Kippzylinder als bei normaler Lagerung auftreten.

Mit ganz besonderem Vorteil ist das Fahrerhaus im Bereich der Anlenkstelle mit einem parallel zum Anlenkbolzen verlaufenden Sicherungsbolzen versehen, der während des Verlaufs des Kolbens aufgrund der dabei auftretenden relativen Verdrehung zunehmend in den Bereich zwischen dem Anlenkbolzen und einem Sicherungshebel einläuft, welch letzter starr an dem oberen Ende des Kippzylinders angebracht ist. Durch diese zusätzliche Maßnahme ist sichergestellt, daß der Anlenkbolzen im Bereich der Kurve des Langlochs dort bei Erreichen der Kipptotpunktlage in jedem Falle gehalten wird.

Weitere zweckmäßige Ausgestaltungen und Weiterbildungen der Erfindung sind in den Unteransprüchen gekennzeichnet.

Ein bevorzugtes Ausführungsbeispiel wird nachfolgend unter Bezugnahme auf die Zeichnung näher erläutert. In dieser zeigt:
- Figur 1: einen LKW mit einem kippbaren Fahrerhaus in perspektivischer Darstellung;
- Figur 2: die Einzelheit II gemäß Fig. 1, in Fahrstellung und teilweise abgebrochener perspektivischer schematischer Darstellung und größerem Maßstab;
- Figur 3: die Einzelheit II, jedoch während des Kippens.

Das schematisch mit 5 bezeichnete Fahrerhaus eines LKWs weist ein Fahrgestell 6 auf, in dessen vorderen Bereich eine - senkrecht zur Zeichenebene verlaufende erste Drehachse 7 angeordnet ist, um welche sich das Fahrerhaus 5 von der - mit einer festen durchgehenden Linie gezeichneten - Fahrstellung in seine - gestrichelt gezeichnete - Montagestellung mittels eines insgesamt mit 8 bezeichneten Kippzylinders gekippt werden kann, der an seinem einen Ende kippbar um eine zweite, zur ersten parallel ausgerichteten Drehachse 9 angelenkt und dessen anderes Ende an einer insgesamt mit 10 bezeichneten Anlenkstelle angreift.

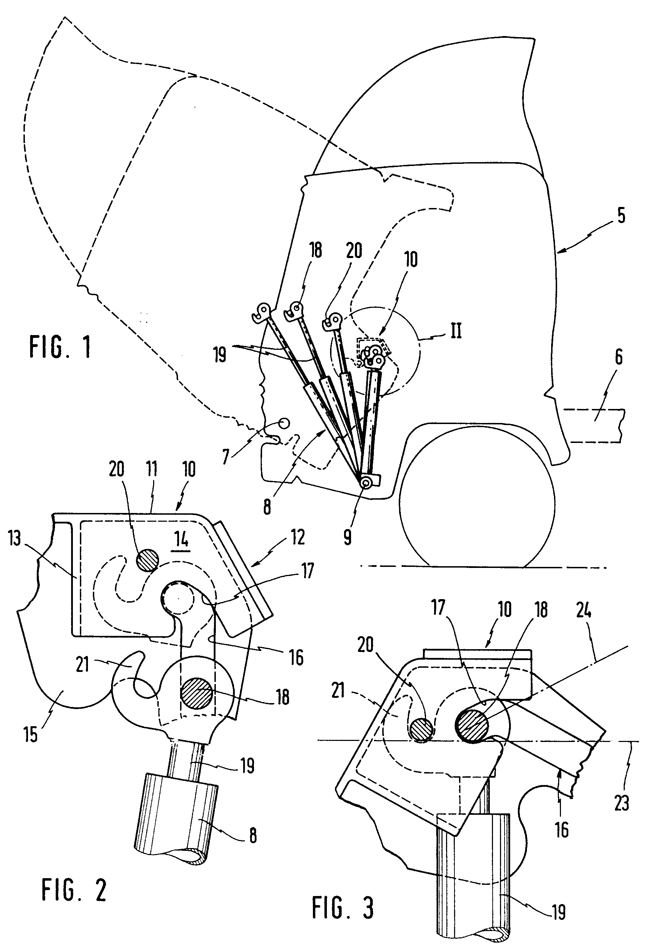

Die Anlenkstelle 10 ist als Einzelheit II in Fig. 2 näher dargestellt.

Die Anlenkstelle 10 ist mit als an der Oberseite 11, der Vorderseite 12 und der Rückseite 13 sowie zwei ungleich ausgebildeten Seitenteilen 14, 15 ausgebildet. Das - in Blickrichtung hintere - Seitenteil 15 ist mit einem insgesamt mit 16 bezeichneten Langloch versehen, welches an seinem oberen Ende eine kulissenartig nach vorne gerichtete Kurve 17 versehen. Das vordere Seitenteil 14 ist demgegenüber kürzer ausgebildet, weist kein Langloch, sondern nur den - kongruenten - Bereich der kulissenartigen Kurve 17 ebenfalls auf.

Der Kippzylinder 8 ist an seinem oberen Ende mit einem parallel zu den Drehachsen 7, 9 verlaufenden Anlenkbolzen 18 versehen, der in dem Langloch 16 des hinteren Seitentei ls 15 geführt ist. Voll durchgezeichnet ist hierbei der Kippzylinder 8 in der Fahrstellung des Fahrerhauses 5 gemäß Fig. 1.

Wird der Kippzylinder 8 mit Druck beaufschlagt, so fährt dessen Kolbenstange 19 aus, so daß der Anlenkbolzen 18 in die in Fig. 2 - gestrichelt - gezeigte obere Stellung am Ende der Kurve 17 der beiden Seitenteile 14, 15 zur Anlage kommt.

Beide Seitenteile 14, 15 sind mit einem parallel zu beiden Drehachse 7, 9 verlaufenden Sicherungsbolzen 20 verbunden, der den taschenförmigen Freiraum dazwischen durchgreift. Starr an dem oberen Ende des Kippzylinders bzw. dessen Kolbenstange 19 ist ein Sicherungshebel 21 angeordnet, zwischen dem und den Anlenkbolzen 18 der Sicherungsbolzen 20 im Verlauf des Kippens aufgrund der dabei auftretenden relativen Verdrehung zwischen der Anlenkstelle 10 und dem Kippzylinder 8 zunehmend einläuft, bis zu der in Fig. 3 gezeigten Endanschlagslage. Durch den Sicherungshebel 21, der radial hinter dem Sicherungsbolzen 20 angreift, wird das tangentiale Versetzen des Kippzylinders 8 in jedem Falle verhindert, so daß der Anlenkbolzen 18 nicht aus dem Bereich der Kurve 17 in das Langloch 16 freikommen kann. Die Gerade 23 die rechtwinklig sowohl zur Längserstreckung des Kippzylinders 8 als auch zu dem Anlenkbolzen 18 verläuft, bildet mit der Erstreckung 24 der Kurve 17 beginnend mit deren Ende ab der Kipptotpunktlage den unteren Schenkel eines spitzen Winkels.

## Patentansprüche

1. Vorrichtung zum Kippen von Fahrerhäusern von Lastkraftwagen um eine am Fahrgestell (6) angeordnete erste Drehachse (7) und mit einem Kippzylinder (8), dessen eines Ende kippbar um eine zur ersten parallel ausgerichtete zweite Drehachse (9) am Fahrgestell (6) gelagert ist und dessen anderes Ende zum Angriff an der Anlenkstelle (10) am Fahrerhaus (5) mittels eines Anlenkbolzens (18) ausgebildet ist, wobei im Verlauf des Kippens des Fahrerhauses (5) der Anlenkbolzen (18) in einer festen Relativlage zu einer am Ende eines Langlochs (16) kulissenartig ausgebildeten Kurve (17) festgelegt wird, so daß ein Durchfallen des Fahrerhauses bei Überschreiten von dessen Kipptotpunktlage verhindert ist, in der der Schwerpunkt des Fahrerhauses(5) genau senkrecht über der ersten Drehachse (7) angeordnet ist,
**dadurch gekennzeichnet,**
daß zu Beginn des Kippens des Fahrerhauses (5) der Anlenkbolzen (18) am Ende der kulissenartig ausgebildeten Kurve (17) zur Anlage kommt, und daß diese bei Erreichen der Kipptotpunktlage die dann so unter Bildung eines Winkels mit der Erstreckung des Kippzylinders winklig angestellt ist, daß das nunmehr ziehend bzw. schiebend auf diesen einwirkende Fahrerhaus (5) nicht bewirken kann, daß der Anlenkbolzen (18) von der Anlage an dem Ende der Kurve (17) freikommt.

2. Vorrichtung nach Anspruch 1, dadurch gekennzeichnet, daß in der Kipptotpunktlage der Winkel, dessen einer Schenkel durch eine rechtwinklig sowohl zur Längserstreckung des Kippyzylinders (8) als auch zu dem Anlekbolzen (18) verlaufende Gerade und dessen anderer Schenke durch die von ihrem Ende ausgehende Erstreckung (24) der Kurve (17) gebildet wird, ein spitzer Winkel ist und daß dessen unterer Schenkel von der Gerade (23) gebildet ist.

3. Vorrichtung nach Anspruch 1, dadurch gekennzeichnet, daß in der Kipptotpunktlage der Winkel, dessen einer Schenke durch eine rechtwinklig sowohl zur Längserstreckung des Kippyzylinders (8) als auch zu dem Anlekbolzen (18) verlaufende Gerade und dessen anderer Schenkel durch die von ihrem Ende ausgehende Erstreckung (24) der Kurve (17) gebildet wird, ein spitzer Winkel ist und daß dessen oberer Schenkel von der Gerade (23) gebildet ist.

4. Vorrichtung nach einem der Ansprüche 1 bis 3, dadurch gekennzeichnet, daß der Anlenkbolzen (18) mit Spiel in dem Langloch (16) und der Kurve (17) geführt ist.

5. Vorrichtung nach einem der Ansprüche 1 bis 4, dadurch gekennzeichnet, daß der Anlenkbolzen (18) mit einem Wälz- oder Gleitlager zum Eingriff in das Langloch (16) und die Kurve (17) versehen und/oder selbst in einer Buchse oder einem Gelenklager gelagert ist.

6. Vorrichtung nach einem der Ansprüche 1 bis 5, dadurch gekennzeichnet, daß das Fahrerhaus (5) im Bereich der Anlenkstelle (10) einen parallel zum Anlenkbolzen (18) verlaufenden Sicherungsbolzen (20) aufweist, der während des Verlaufs des Kippens aufgrund der dabei auftretenden relativen Verdrehung zunehmend in den Bereich zwischen dem Anlenkbolzen (18) und einem Sicherungshebel (21) einläuft, der starr an dem oberen Ende des Kippzylinders (8) angebracht ist.

## Claims

1. Device for tipping the cabs of lorries about a first axis of rotation (7), which is disposed on the chassis (6), and having a tipping cylinder (8), of which one end is mounted on the chassis (6) so as to be capable of tipping about a second axis of rotation (9) directed parallel to the first axis of rotation and the other end is designed to act upon the articulation point (10) on the cab (5) with the aid of a link pin (18), the pin (18) in the course of tipping of the cab (5) being locked in a fixed relative position to a curve (17) formed like a restraining gate at the end of an oblong hole (16) so that the cab is prevented from falling over upon passing its tipping dead centre position in which the centre of gravity of the cab (5) is disposed precisely vertically above the first axis of rotation (7), characterised in that at the start of tipping of the cab (5), the link pin (18) comes to rest against the end of the gate-like curve (17), and that said curve on attainment of the tipping dead centre position is so angled, forming an angle with the line of the tipping cylinder, that the cab, which from then on is exerting a pulling or pushing action upon the tipping cylinder, cannot cause the link pin (18) to escape from its position resting against the end of the curve (17).

2. Device according to claim 1, characterised in that in the tipping dead centre position the angle, of which one leg is formed by a straight line extending at right angles both to the line of the tipping cylinder (8) and to the link pin (18) and the other leg is formed by the extension (24) of the curve (17) emanating from its end, is an acute angle, and that the bottom leg of said angle is formed by the straight line (23).

3. Device according to claim 1, characterised in that in the tipping dead centre position the angle, of which one leg is formed by a straight line extending at right angles both to the line of the tipping cylinder (8) and to the link pin (18) and the other leg is formed by the extension (24) of the curve (17) emanating from its end, is an acute angle, and that the top leg of said angle is formed by the straight line (23).

4. Device according to one of claims 1 to 3, characterised in that the link pin (18) is guided with play in the oblong hole (16) and the curve (17).

5. Device according to one of claims 1 to 4, characterised in that the link pin (18) is provided with a rolling or sliding bearing for engagement into the oblong hole (16) and the curve (17) and/or is itself mounted in a bearing bush or a pivoting bearing.

6. Device according to one of claims 1 to 5, characterised in that the cab (5) in the region of the articulation point (10) has locking pin (20) which extends parallel to the link pin (18) and in the course of tipping, owing to the relative rotation which then occurs, runs progressively into the region between the pin (18) and a locking lever (21) which is rigidly mounted on the top end of the tipping cylinder (8).

## Revendications

1. Dispositif de basculement de cabines de conducteurs de camions autour d'un premier axe de rotation (7) disposé sur le châssis roulent (6) et comportant un vérin de basculement (8) dont une extrémité est montée de manière à pouvoir basculer autour d'un deuxième axe de rotation (9) parallèle au premier sur le châssis roulant (6) et dont l'autre extrémité est réalisée de manière à agir, au moyen d'une tige articulée (18), sur le point d'articulation (10) de la cabine du conducteur (5), tandis que pendant le basculement de ladite cabine (5), la tige articulée (18) est fixée dans une position fixe par rapport à une came (17) réalisée à la manière d'un coulisseau sur l'extrémité d'un trou allongé (16), de manière à empêcher toute chute de la cabine au conducteur dans le cas d'un dépassement de sa position de point mort dans laquelle le centre de gravité de ladite cabine (5) se situe exactement à la verticale au-dessus du premier axe de rotation (7), caractérisé en ce que, au commencement du basculement de la cabine (5), la tige articulée (18) vient s'appliquer à l'extrémité de la came (17) réalisée à la manière d'un coulisseau, et en ce que cette came, lorsque la position de point mort de basculement est atteinte, est placée angulairement par rapport à l'extension du vérin en formant un angle tel que la cabine (5) gui exerce alors un effet de traction ou de poussée sur ce vérin ne peut pas provoguer le dégagement de la tige (18) de sa position d'application sur l'extrémité de la came (17).

2. Dispositif selon la revendication 1, caractérisé en ce que, dans la position de point mort de basculement, l'angle, dont une branche est formée par une droite perpendiculaire aussi bien à l'extension longitudinale du vérin (8) qu'à la tige (18) et dont l'autre branche est formée par l'extension (24) à partir de son extrémité de la came (17), est un angle aigu et en ce que sa branche inférieure est formée par la droite (23).

3. Dispositif selon la revendication 1, caractérisé en ce que, dans la position de point mort, l'angle dont une branche est formée par une droite perpendiculaire aussi bien à l'extension longitudinale du vérin (8) qu'à la tige (18) et dont l'autre branche est formée par l'extension partant de son extrémité de la came (17), est un angle aigu et en ce que sa branche supérieure est formée par la droite (23).

4. Dispositif selon l'une des revendications 1 à 3, caractérisé en ce que la tige articulée (18) passe, avec un certain jeu, dans le trou allongé (16) et dans la came (17).

5. Dispositif selon l'une des revendications 1 à 4, caractérisé en ce que, pour son engagement dans le trou allongé (16) et la came (17), la tige articulée (18) est munie d'un palier lisse ou d'un palier à roulements et/ou en ce qu'elle est, elle-même, montée dans un coussinet ou dans une articulation à rotule.

6. Dispositif selon l'une des revendications 1 à 5, caractérisé en ce que la cabine de conducteur (5) présente, dans la zone du point d'articulation (10), parallèlement à la tige articulée (18), une tige de sécurité (20) qui pénètre progressivement dans la zone comprise entre la tige (18) et un levier de sécurité (21) pendant le déroulement du basculement en raison de la torsion relative qui se produit à ce moment, ledit levier de sécurité (21) étant fixé rigidement sur l'extrémité supérieure du vérin (8).
